(19) Europäisches Patentamt
European Patent Office
Office européen des brevets

(11) **EP 2 704 494 B1**

(12) **EUROPÄISCHE PATENTSCHRIFT**

(45) Veröffentlichungstag und Bekanntmachung des Hinweises auf die Patenterteilung:
**04.10.2017   Patentblatt 2017/40**

(51) Int Cl.:
***H04W 52/02*** *(2009.01)*      ***H04W 72/04*** *(2009.01)*

(21) Anmeldenummer: **13182163.9**

(22) Anmeldetag: **29.08.2013**

(54) **Abschaltung von Ressourcen eines Funkzugangsnetzes bei geringer Netzauslastung**

Switching off resources of a radio access network in low network load periods

Désactivation de ressources d'un réseau d'accès radio en cas de faible charge de réseau

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.09.2012   DE 102012215596**

(43) Veröffentlichungstag der Anmeldung:
**05.03.2014   Patentblatt 2014/10**

(73) Patentinhaber: **Vodafone Holding GmbH**
**40213 Düsseldorf (DE)**

(72) Erfinder:
• **Baumgartner, Andreas**
**09126 Chemnitz (DE)**

• **Bauschert, Thomas, Prof. Dr.**
**81477 München (DE)**

(74) Vertreter: **Jostarndt Patentanwalts-AG**
**Philipsstrasse 8**
**52068 Aachen (DE)**

(56) Entgegenhaltungen:
**WO-A1-02/07464          WO-A1-2011/031197**
**WO-A1-2011/096867     WO-A1-2012/107930**
**WO-A2-2009/011640     US-A1- 2011 170 466**
**US-B1- 6 470 195**

**Beschreibung**

Die Erfindung befasst sich mit der Abschaltung von Ressourcen eines Funkzugangsnetzes eines Mobilfunksystems bei geringer Netzauslastung. Insbesondere betrifft die Erfindung ein Verfahren, ein Computerprogramm sowie ein System zum Ermitteln von Ressourcen eines Funkzugangsnetzes, die bei geringer Netzauslastung abschaltbar sind.

Ein Ziel der Weiterentwicklung von Kommunikationsnetzen besteht darin, deren Energieverbrauch zu senken, um Umweltbelastungen zu reduzieren und die Wirtschaftlichkeit des Betriebs der Kommunikationsnetze zu verbessern. In Bezug auf Mobilfunksysteme liegt der Fokus der Energieeinsparung auf dem Funkzugangsnetz, welches mit ca. 60-80% den größten Anteil am Energieverbrauch eines Mobilfunksystems aufweist. Auswertungen der Verkehrsdaten von Mobilfunksystemen zeigen dabei, dass vor allem in den Nachtstunden und an Wochenenden sehr wenig Mobilfunkverkehr anfällt, so dass die vorhandenen Kapazitäten von Funkzugangsnetzen, die in der Regel zur Bewältigung der maximalen Netzlast ausgelegt sind, nur in geringem Umfang genutzt werden. In derartigen verkehrsschwachen Zeiten besteht daher das Potenzial, durch eine effektivere Nutzung von Funkressourcen den Energieverbrauch des Funkzugangsnetzes zu verringern.

Die Veröffentlichung "Traffic-Driven Power Saving in Operational 3G Cellular Networks", C. Peng et al. MobiCom 2011, schlägt vor, in verkehrsschwachen Zeiten ausgewählte Basisstationen abzuschalten, um Energie für den Betrieb des Funkzugangsnetzes einzusparen. Zur Auswahl der im Energiesparbetrieb abzuschaltenden Basisstationen wird ein gitterbasiertes Verfahren eingesetzt.

WO 2011/096867 A1 offenbart ein Verfahren und eine Vorrichtung eines zellularen Funksystems, das es erlaubt, den Energieverbrauch von Funkzellen im aktiven Zustand mit dem Energieverbrauch der Funkzellen zu vergleichen, wenn eine oder mehrere der Funkzellen in einen passiven Zustand geschaltet werden.

Es ist eine Aufgabe der vorliegenden Erfindung, durch eine geeignete Auswahl von Ressourcen eines Funkzugangsnetzes, die in einem Energiesparbetrieb des Funkzugangsnetzes abgeschaltet werden, eine möglichst hohe Energieeinsparung im Energiesparbetrieb zu erzielen.

Die Aufgabe wird gelöst durch ein Verfahren mit den Merkmalen des Anspruchs 1, durch ein Computerprogramm nach Anspruch 11 und durch ein System nach Anspruch 12. Ausgestaltungen des Verfahrens, das Computerprogramms und des Systems sind in den abhängigen Ansprüchen angegeben.

Gemäß einem ersten Aspekt der Erfindung wird ein Verfahren zum Ermitteln von Ressourcen eines Funkzugangsnetzes vorgeschlagen, die bei geringer Netzauslastung abschaltbar sind. Das Verfahren umfasst folgende Schritte:

- Ermitteln einer Überlappung wenigstens eines Sektors einer Basisstation des Funkzugangsnetzes durch wenigstens einen Sektor einer umliegenden Basisstation des Funkzugangsnetzes, wobei die Überlappung des Sektors mittels numerischer Berechnung anhand von Stichprobenpunkten innerhalb des Sektors in Abhängigkeit von einer Sendeweite des wenigstens einen Sektor der umliegenden Basisstation des Funkzugangsnetzes erfolgt und die Sendeweite in Abhängigkeit von wenigstens einem Parameter des wenigstens einen Sektor der umliegenden Basisstation bestimmt werden,
- Bestimmen wenigstens eines Kandidatensektors für eine Abschaltung, wenn die Stichprobenpunkte in dem Kandidatensektor innerhalb des wenigstens einen Sektor umliegender Basisstationen liegen,
- Auswählen einer Kombination abzuschaltender Sektoren aus den Kandidatensektoren und Abschalten der Kandidatensektoren der ausgewählten Kombination, und
- wobei für den Kandidatensektor eine Konfiguration der Parameter der den Kandidatensektor überdeckenden Sektoren ermittelt wird, die bei einer möglichst minimalen Abweichung von der Konfiguration der Parameter im Normalbetrieb des Funkzugangsnetzes zur vollständigen Überdeckung des Kandidatensektors führt, und wobei die ermittelte Konfiguration bei der Abschaltung der ausgewählten Sektoren eingestellt wird.

Gemäß einem zweiten Aspekt schlägt die Erfindung ein Computerprogramm vor, das einen Softwarecode umfasst, der so angepasst ist, dass er das Verfahren und seine Ausgestaltungen ausführen kann, wenn er auf einer Datenverarbeitungsanlage ausgeführt wird.

Gemäß einem dritten Aspekt wird ein System zum Ermitteln von Ressourcen eines Funkzugangsnetzes vorgeschlagen, die bei geringer Netzauslastung abschaltbar sind. Das System umfasst:

- Mittel, die dazu ausgestaltet sind, eine Überlappung wenigstens eines Sektors einer Basisstation des Funkzugangsnetzes durch wenigstens einen Sektor einer umliegenden Basisstation des Funkzugangsnetzes mittels numerischer Berechnung anhand von Stichprobenpunkten innerhalb des Sektors in Abhängigkeit von einer Sendeweite des wenigstens einen Sektor der umliegenden Basisstation des Funkzugangsnetzes zu ermitteln,
- Mittel, die Sendeweite in Abhängigkeit von wenigstens einem Parameter des wenigstens einen Sektor der umliegenden Basisstation zu bestimmen,
- Mittel, die dazu ausgestaltet sind, wenigstens einen Kandidatensektor für eine Abschaltung in Abhängigkeit davon zu bestimmen, dass die Stichprobenpunkte in dem Kandidatensektor innerhalb von wenigstens einem Sektor umliegender Basisstationen liegen,

- Mittel, die dazu ausgestaltet sind, eine Kombination abzuschaltender Sektoren aus den Kandidatensektoren auszuwählen und die Kandidatensektoren der ausgewählten Kombination abzuschalten, und

- Mittel, die dazu ausgestaltet sind, für den Kandidatensektor eine Konfiguration der Parameter der den Kandidatensektor überdeckenden Sektoren zu ermitteln, die bei einer möglichst minimalen Abweichung von der Konfiguration der Parameter im Normalbetrieb des Funkzugangsnetzes zur vollständigen Überdeckung des Kandidatensektors führt, und

- Mittel, die dazu ausgestaltet sind, die ermittelte Konfiguration bei der Abschaltung der ausgewählten Sektoren einzustellen.

Ein Vorteil der Erfindung besteht darin, dass einzelne Sektoren innerhalb eines Funkzugangsnetzes für eine Abschaltung in einem Energiesparbetrieb des Funkzugangsnetzes ermittelt werden können. Hierdurch wird das in dem Funkzugangsnetz bestehende Abschaltpotenzial besser ausgenutzt und die Energieeinsparung im Energiesparbetrieb erhöht. Als Sektor wird ein Sende- und Empfangsbereich einer Antenne einer Basisstation des Funkzugangsnetzes bzw. ein Sende- und Empfangsbereich einer sogenannten Small Cell (Femto-, Piko-, Mikrozelle) bezeichnet, wobei zumindest einzelne Basisstationen durch die Verwendung mehrerer Antennen mehrere Sektoren versorgen können. Unter einer Abschaltung eines Sektors wird insbesondere der Übergang von den Sektor versorgenden Ressourcen in einen Betriebszustand mit einer verringerten Energieaufnahme verstanden. Zur Abschaltung können Ressourcen beispielsweise vollständig ausgeschaltet werden oder in einen Stand-by-Betrieb versetzt werden.

Die Überlappung eines Sektors wird anhand von Stichprobenpunkten innerhalb des Sektors bestimmt, und ein Kandidatensektor ermittelt wird, wenn die Stichprobenpunkte in dem Kandidatensektor innerhalb von Sektoren umliegender Basisstationen liegen. Dies erlaubt eine numerische Berechnung der Überlappung von Sektoren. Die Stichprobenpunkte können in einer Ausführungsform ein regelmäßiges Gitter bilden. Sofern alle Stichprobenpunkte eines Sektors durch einen anderen Sektor überdeckt werden, ist eine im Wesentlichen vollständige Überdeckung gegeben.

Die Ermittlung der Überlappung eines Sektors durch einen weiteren Sektor erfolgt in Abhängigkeit von einer Sendeweite des weiteren Sektors, und die Sendeweite wird in Abhängigkeit von wenigsten einem Parameter des zugehörigen Sektors bestimmt. Vorzugsweise wird die Überlappung zudem in Abhängigkeit von einer Sendeweite des überlappten Sektors ermittelt. Zur Ermittlung der Sendeweite eines Sektors, die hierin auch als Senderadius bezeichnet wird, wird gemäß einer Ausführungsform des Verfahrens und des Systems mittels eines Pfadverlustmodells eine Entfernung zu der den Sektor versorgenden Basisstationen bestimmt, in welcher der Pfadverlust einen vorgegebenen Schwellenwert überschreitet. Das Pfadverlustmodell wird unter anderem entsprechend der in dem Sektor verwendeten Sendefrequenz ausgewählt, wobei grundsätzlich alle dem Fachmann an sich bekannten und geeigneten Pfadverlustmodelle verwendet werden können. Vorzugsweise erfolgt die Berechnung der Sendeweite mittels des Pfadverlustmodells in Abhängigkeit von der Bebauung des Sektors, so dass eine realistische Berechnung des Senderadius gewährleistet ist. Die Sendeweite kann insbesondere als ein Abstand von einer Basisstationen bestimmt werden, in der ein bestimmter Schwellwert für die Empfangsstärke unterschritten wird. Der Schwellwert kann in Abhängigkeit von einem Mobilfunkdienst, wie z.B. Telefonieren, Streaming von Daten oder Datenübertragung bestimmter Güte und Schnelligkeit, vorgegeben werden und insbesondere so gewählt sein, dass der Dienst noch mit einer ausreichenden Dienstqualität genutzt werden kann. In Abhängigkeit des betrachtenden Mobilfunkdienstes kann der Senderadius bzw. die Sendeweite eines Sektors unterschiedlich sein, da die Mobilfunkdienste unterschiedliche Schwellwerte besitzen.

Im Normalbetrieb weisen die Sektoren des Funkzugangsnetzes in der Regel nicht ihre maximal mögliche Ausdehnung auf. Die Begrenzung der Ausdehnung dient dabei insbesondere zur Vermeidung von Interferenzen zwischen verschiedenen Sektoren. Im Betriebssparmodus kann die Sektorausdehnung jedoch erhöht werden, da sich aufgrund der Abschaltung von Sektoren weniger Interferenzen ergeben können. Daher ist in einer Ausgestaltung des Verfahrens und des Systems vorgesehen, die Überlappung des Sektors der Basisstation durch einen Sektor einer umliegenden Basisstation nach Maßgabe einer die Sendeweite des weiteren Sektors maximierenden Konfiguration des Parameters des Sektors der umliegenumliegenden Basisstationen zu ermitteln. Hierdurch wird das Abschaltpotential im Funkzugangsnetz besser ausgeschöpft.

Bei dem Parameter handelt es sich vorzugsweise um eine Abwärtsneigung der Strahlrichtung der den Sektor versorgenden Antenne der umliegenden Basisstation und/oder eine Sendeleistung der Antenne. Die den Senderadius maximierende Konfiguration des Parameters eines Sektors umfasst vorzugsweise eine minimale Abwärtsneigung der Strahlrichtung der den Sektor versorgenden Antenne und/oder eine maximale Sendeleistung der Antenne.

Es ist für das Verfahren und das System vorgesehen, dass für den Kandidatensektor eine Konfiguration der Parameter der den Kandidatensektor überdeckenden Sektoren ermittelt wird, die bei einer möglichst minimalen Abweichung von der Konfiguration der Parameter im Normalbetrieb des Funkzugangsnetzes zur im wesentlichen vollständigen Überdeckung des Kandidatensektors führt, und dass die ermittelte Konfiguration bei der Abschaltung der ausgewählten Kandidatensektoren eingestellt wird. Die ermittelte Konfiguration kann mögliche Interferenzen zwischen Sektoren im Energiesparbetrieb minimieren und kann gleichzeitig eine vollständige oder nahezu vollständige Netzabdeckung durch die Sektoren sicherstellen, die im Energiesparbetrieb eingeschaltet bleiben. Vorzugsweise ist vorgesehen, zur Ermittlung der Kandidatensektoren zunächst von maximalen Senderadien der umliegenden Sektoren auszugehen und in einem weiteren Schritt für jeden Kandidatensektor die zuvor beschriebene optimierte Konfiguration der überlappenden Sektoren zu ermitteln.

Im Allgemeinen existiert eine Mehrzahl möglicher Kombinationen von Kandidatensektoren, die im Energiesparbetrieb abgeschaltet werden können. Aus den möglichen Kombinationen werden nach vorgegebenen Kriterien vorzugsweise Kombinationen ausgesucht, die zu einer möglichst hohen Energieeinsparung führen.

Dabei sieht eine Ausgestaltung des Verfahrens und des Systems vor, dass eine Kombination abzuschaltender Kandidatensektoren ermittelt wird, bei der Sektoren, welche die in der Abschaltkombination enthaltenen Kandidatensektoren überdecken, nicht abgeschaltet werden. Hierdurch kann eine vollständige Netzabdeckung im Energiesparbetrieb gewährleistet werden.

Eine weitere Ausgestaltung des Verfahrens und der Vorrichtung beinhaltet, dass eine Kombination abzuschaltender Kandidatensektoren ermittelt wird, in der keine weiteren Sektoren abgeschaltet werden können, ohne die Abdeckung für ein Teilgebiet des von dem Funkzugangsnetz überdeckten geografischen Gebiets zu verlieren. Hierdurch kann sichergestellt werden, dass eine maximale Anzahl von Sektoren im Energiesparbetrieb abgeschaltet wird.

Ferner ist in einer Ausführungsform des Verfahrens und des Systems vorgesehen, dass eine Kombination abzuschaltender Kandidatensektoren ermittelt wird, die eine maximale Anzahl von Basisstationen umfasst, bei denen alle Sektoren Kandidatensektoren sind. Wenn sämtliche Sektoren einer Basisstation abgeschaltet werden, dann können neben sektorspezifischen Komponenten der Basisstation auch gemeinsam genutzte Komponenten abgeschaltet werden, die allen Sektoren zugeordnet sind. Durch eine Maximierung der Anzahl von Basisstationen, bei denen im Energiesparbetrieb alle Sektoren abgeschaltet werden, kann die Energieeinsparung weiter erhöht werden.

Eine weitere Ausgestaltung des Verfahrens und des Systems zeichnet sich dadurch aus, dass der Kandidatensektor und die den Kandidatensektor überdeckenden Sektoren der umliegenden Basisstationen unterschiedlichen Funkzugangstechnologien und/oder Funkfrequenzen zugeordnet sind. Dies ermöglicht eine Abschaltung von Kandidatensektoren auch dann, wenn sie von Sektoren einer anderen Funkzugangstechnologie bzw. Funkfrequenz überlagert werden, so dass das Abschaltpotenzial weiter erhöht wird. Beispielsweise kann vorgesehen sein, dass die Basisstationen teilweise einem UTRAN (UMTS Terrestrial Radio Access Network) und teilweise einem GERAN (GSM/Edge Radio Access Network) oder E-UTRAN (Evolved-UTRAN) zugeordnet sein können, oder es kann vorgesehen sein, dass die Basisstationen derselben Funkzugangstechnologie, jedoch unterschiedlichen Funkfrequenzen, wie etwa 800 MHz und 1,6 GHz in einem UTRAN, zugeordnet sein können. Gleichfalls kann es jedoch auch vorgesehen sein, dass die Basisstationen derselben Funkzugangstechnologie zugeordnet sind und/oder dieselbe Funkfrequenz nutzen, so dass Mobilfunkendgeräte bei der Abschaltung eines Sektors keinen Wechsel zu einer anderen Funkzugangstechnologie und/oder Funkfrequenz vornehmen müssen.

Die zuvor genannten und weitere Vorteile, Besonderheiten und zweckmäßige Weiterbildungen der Erfindung werden auch anhand der Ausführungsbeispiele deutlich, die nachfolgend unter Bezugnahme auf die Figuren beschrieben werden.

Von den Figuren zeigt:

Fig. 1     eine schematische Darstellung mehrerer Basisstationen eine Funkzugangsnetzes, das mit einem Kernnetz eines Mobilfunksystems verbunden ist,

Fig. 2     eine Skizze zur Veranschaulichung der Berechnung des Senderadius' in Abhängigkeit von der Abwärtsneigung der Strahlrichtung,

Fig. 3     eine schematische Veranschaulichung einer modellhaften Beschreibung von Sektoren einer Basisstation,

Fig. 4     ein schematische Ablaufdiagramm einer Heuristik zur Ermittlung einer optimierten Konfiguration von Abwärtsneigungen für Überlappungssektoren eines Kandidatensektors und

Fig. 5     ein schematisches Ablaufdiagramm mit Schritten zur Ermittlung einer Kombination abzuschaltender Sektoren des Funkzugangsnetzes.

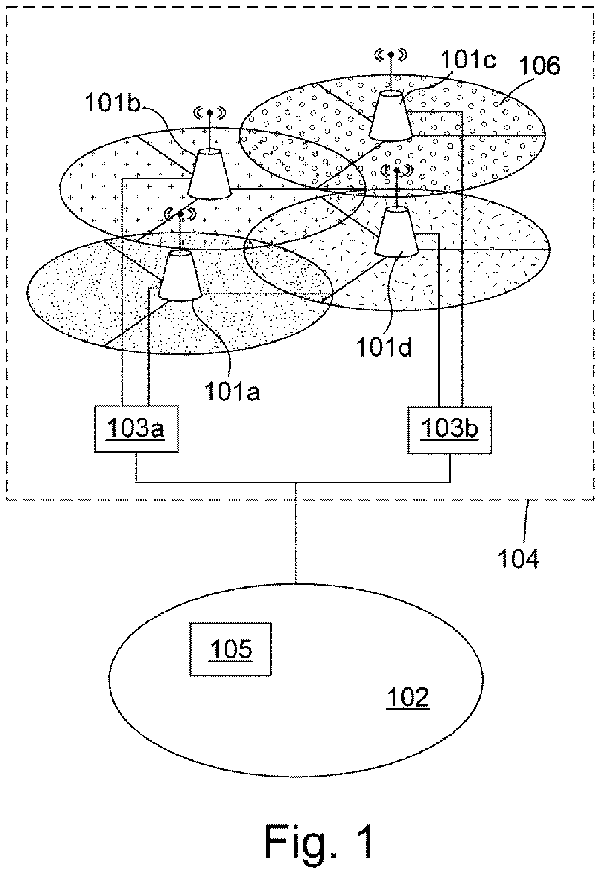

Schematisch ist in der Figur 1 ein Funkzugangsnetz 104 eines zellularen Mobilfunksystems dargestellt, das die Infrastruktur zur Herstellung von drahtlosen Verbindungen zwischen Mobilfunkendgeräten und dem Mobilfunksystem bereitstellt und insbesondere über eine Mehrzahl von Basisstationen 101i verfügt, von denen in der Figur 1 beispielhaft einige Basisstationen 101i dargestellt sind. Das Funkzugangsnetz 104 ist mit einem Kernnetz 102 des Mobilfunksystems verbunden, das weitere Infrastruktur zur Bereitstellung von Mobilfunkdiensten beinhaltet, die beispielsweise Dienste zur Sprach- und/oder Videotelefonie und Dienste zur Datenübertragung bzw. zur Verbindung mit Datennetzen wie etwa dem Internet umfassen können. Das Funkzugangsnetz 104 zeichnet sich dadurch aus, dass bei geringer Auslastung seiner Funkressourcen ein Energiesparbetrieb aktiviert werden kann, in dem ausgewählte Funkressourcen abgeschaltet werden. Dabei kann es sich bei dem Funkzugangsnetz 104 in verschiedenen Ausgestaltungen um das gesamte Funkzugangsnetz eines oder mehrerer Mobilfunkbetreiber oder um einen vorgegebenen Teil des Gesamtfunkzugangsnetzes eines oder mehrerer Mobilfunkanbieter handeln. Insbesondere kann das Funkzugangsnetz 104 einen Teil eines Gesamtfunkzugangsnetzes umfassen, in dem eine mit der Tageszeit und/oder dem Wochentag schwankende Netzauslastung besteht, wie es beispielsweise in Innenstädten und Industriegebieten oder auch bei bestimmten Großveranstaltungen (Sport, Musik, Events) häufig der Fall ist.

Die Basisstationen 101i (i = a,...,d) versorgen jeweils einen oder mehrere Sektoren, die Funkzellen des Funkzugangsnetzes 104 entsprechen und denen jeweils eine Antenne für das Senden und den Empfang von Funksignalen zugeordnet ist (in der Figur 1 sind die Sektoren verschiedener Basisstationen zur besseren Unterscheidbarkeit unterschiedlich schraffiert). Die Funkzellen bzw. Sektoren 106 des Funkzugangsnetzes 104 können unterschiedliche Ausdehnungen besitzen. Dabei können zumindest einige der Funkzellen des Funkzugangsnetzes 104 als Kleinzellen (Mikro-, Piko- oder Femto-Zellen) ausgebildet sein, die in Gebieten eingerichtet werden, in denen temporär eine hohe Netzlast besteht. Die in der Figur 1 exemplarisch gezeigten Basisstationen 101i versorgen jeweils drei Sektoren, wobei ein beispielhaft ausgewählter Sektor der Basisstation 101i mit der Bezugsziffer 106 versehen ist. Zur Versorgung von mehreren Sektoren werden in den Basisstationen 101i Sektorantennen eingesetzt, die bei drei Sektoren beispielsweise in einem Winkelabstand von 120 Grad angeordnet werden. Wird eine andere Anzahl von Funkzellen von einer Basisstation 101i versorgt, so weist diese eine entsprechend angepasste Antennenkonfiguration auf. Die Antennen einer Basisstation 101i sind mit weiteren Komponenten der Basisstation 101i verbunden, die antennen- bzw. sektorspezifische Komponenten, wie beispielsweise RRUs (Remote Radio Units), umfassen, die jeweils einer Antenne zugeordnet sind, sowie sektorübergreifende Komponenten, welche in Verbindung mit sämtlichen Antennen der Basisstation 101! genutzt werden. Den Basisstationen 101i ist in einer Ausgestaltung jeweils eine Steuerungseinheit 103a,b zugeordnet, über welche die Basisstation 101i mit dem Kernnetz 102 verbunden ist. Dabei können mehrere Basisstationen 101i mit jeweils einer Steuerungseinheit 103 verbunden sein. Die Steuerungseinheiten 103 können zur Verwaltung der Basisstationen 101i und ihrer Funkressourcen vorgesehen sein und sind in einer Ausgestaltung für die Mobilitätsverwaltung der Mobilfunkendgeräte zuständig, die mit den angeschlossenen Basisstationen 101 i verbunden sind.

Das Funkzugangsnetz 104 kann unterschiedliche Funkzugangstechnologien beinhalten. Insbesondere kann es sich um ein UTRAN gemäß einem UMTS (Universal Mobile Telecommunications System) handeln, in dem die Basisstationen 101i als NodeBs und die Steuerungseinheiten 103a,b als RNCs (Radio Network Controllers) ausgebildet sind. Gleichfalls kann das Funkzugangsnetz 104 als GERAN entsprechend einem GSM (Global System for Mobile Communications) ausgebildet sein, wobei die Basisstationen 101i des GERAN als BTSs (Base Transceiver Station) und die Steuerungseinheiten 103a,b als BSCs (Base Station Controllers) ausgeführt sind. In einer Ausgestaltung kann es sich auch um ein E-UTRAN nach einem LTE (Long Term Evolution)-Standard handeln, in dem die Basisstationen 101i als eNode Bs ausgestaltet sind. In einer weiteren Ausgestaltung handelt es sich um ein WLAN-Funkzugangsnetz, in dem die Basisstationen 101i entsprechende Funkzugangspunkte bilden und auf zusätzliche Steuerungseinheiten ggf. verzichtet werden kann. Über diese Beispiele hinaus kann das Funkzugangsnetz 104 auch weitere Funkzugangstechnologien implementieren. In einer Ausführungsform sind alle Basisstationen 101i des Funkzugangsnetzes 104 derselben Funkzugangstechnologie zugeordnet oder derselben Funkfrequenz. Das Funkzugangsnetz 104 kann jedoch gleichfalls durch mehrere Teilzugangsnetze gebildet werden, denen unterschiedliche Funkzugangstechnologien und/oder Funkfrequenzen zugeordnet sind und die sich vollständig oder teilweise räumlich überdecken können. So kann das Funkzugangsnetz 104 beispielsweise auch aus einer Kombination von WLAN-, GERAN-, UTRAN- und/oder E-UTRAN-Funkzugangstechnologien gebildet werden. Bei Vorhandensein unterschiedlicher Teilzugangsnetze werden in dem Funkzugangsnetz 104 vorzugsweise Mobilfunkendgeräte eingesetzt, die zur Verbindung mit mehreren Funkzugangsnetzen geeignet sind und sich daher nach Wahl mit mehreren der vorhandenen Teilzugangsnetze verbinden können. Derartige Mobilfunkendgeräte können sich bei Abschaltung eines Sektors einer Funkzugangstechnologie ggf. über einen Sektor einer anderen Funkzugangstechnologie mit dem Mobilfunksystem verbinden.

Das Funkzugangsnetz 104 ist derart eingerichtet, dass es im Normalbetrieb den Zugriff einer großen Anzahl von Mobilfunkendgeräten, die zu Stoßzeiten im geografischen Gebiet des Funkzugangsnetzes 104 auftreten kann, mit einer hinreichenden Datenrate ermöglicht. Insbesondere wird dies durch eine geeignete Zellenstruktur des Funkzugangsnetzes 104 erreicht, wobei in Bereichen mit einem hohen maximalen Verkehrsaufkommen geringe Zellengrößen zur Bewältigung des maximalen Verkehrsaufkommens mittels einer begrenzten Anzahl verfügbarer Funkkanäle vorgesehen sind. Wie auch in der Figur 1 dargestellt ist, überlappen sich benachbarte Sektoren zumindest teilweise. Die Überlappung ist bei Sektoren derselben Funktechnologie insbesondere vorgesehen, um unterbrechungsfreie Handover von Funkverbindungen zwischen den Sektoren zu ermöglichen. Wenn sich das Funkzugangsnetz 104 aus mehreren Teilnetzen unterschiedlicher Funkzugangstechnologien zusammensetzt, dann wird vorzugsweise zumindest an einigen Standorten des Funkzugangsnetzes 104 durch die Überlappung der Sektoren von Basisstationen 101i verschiedener Funkzugangstechnologien eine Versorgung mit verschiedenen Funkzugangstechnologien erzielt.

In verkehrsschwachen Zeiten, wie sie beispielsweise nachts und/oder an Wochenenden vorliegen können, werden die vorhandenen Ressourcen des Funkzugangsnetzes 104 in der Regel nur in einem geringem Umfang genutzt, so dass lediglich eine geringe Ressourcenauslastung besteht. Daher ist im Energiesparbetrieb des Funkzugangsnetzes vorgesehen, ausgewählte Sektoren zu verkehrsschwachen Zeiten abzuschalten und auf diese Weise die für den Betrieb dieser Sektoren erforderliche Energie einzusparen. Die Abschaltung erfolgt dadurch, dass Ressourcen der Basisstationen 101i in einen Betriebszustand versetzt werden, in dem sie weniger Energie aufnehmen als im Normalbetrieb. Das Abschalten kann insbesondere das vollständige Ausschalten von Ressourcen einer Basisstation 101i umfassen oder die Umschaltung von Ressourcen in einen Standby-Betrieb oder ähnlichen Betriebszustand.

Übergänge des Funknetzes zwischen dem Normalbetrieb und dem Energiesparbetrieb werden in einer Ausgestaltung von einer Netzverwaltungseinheit 105 gesteuert, die mit den Basisstationen 101i bzw. den ihnen zugeordneten Steuerungseinheit 103a, b verbunden ist und beispielsweise im Kernnetz 102 des Mobilfunksystems angeordnet sein kann. Die Netzverwaltungseinheit 105 empfängt in einer Ausführungsform Messdaten über die Auslastung der Funkzellen des Funkzugangsnetzes 102, die beispielsweise in den Basisstationen 101i, den zugehörigen Steuerungseinheiten 103a,b und/oder weiteren Einheiten des Kernnetzes 102 erfasst werden können. Während des Normalbetriebs des Funkzugangsnetzes 104 prüft die Netzverwaltungseinheit 105 anhand der Messdaten, ob die Bedingungen für einen Übergang in den Energiesparbetrieb vorliegen. Alternativ oder ergänzend kann auch vorgesehen sein, dass zuvor erfasste Messdaten in der Netzverwaltungseinheit 105 hinterlegt werden, aus denen sich regelmäßig wiederkehrende Abschaltzeiten mit geringem Verkehrsaufkommen ergeben, oder derartige Abschaltzeiten können bereits anstelle von Messdaten in der Netzverwaltungseinheit 105 hinterlegt werden. Bei den wiederkehrenden Abschaltzeiten kann es sich beispielsweise um bestimmt Tageszeiten, etwa zur Nachtzeit, und/oder um bestimmte Wochentage, etwa Wochenenden, handeln.

Wenn anhand von Messdaten und oder anhand der hinterlegten Abschaltzeiten festgestellt wird, dass der Energiesparbetrieb zu initiieren ist, veranlasst die Netzverwaltungseinheit 105 die Abschaltung von Sektoren sowie die ggf. vorgesehene Anpassungen der Konfiguration von Basisstation 101i für die im Energiesparbetrieb eingeschalteten Sektoren. Hierzu werden entsprechende Steuersignale von der Netzverwaltungseinheit 101 an die betreffenden Basisstationen 101i bzw. die zugehörigen Steuerungseinheiten 103a,b gesendet. Gleichfalls steuert die Netzverwaltungseinheit 105 anhand entsprechender Steuersignale, die an die Basisstationen 101i bzw. die zugehörigen Steuerungseinheiten 103a,b gesendet werden, den Übergang vom Energiesparbetrieb in den Normalbetrieb, wenn die Netzverwaltungseinheit 105 im Energiesparbetrieb anhand der Messdaten über die Netzauslastung feststellt, dass die Bedingungen für eine Rückkehr zum Normalbetrieb erfüllt sind.

Bei der Abschaltung von Sektoren werden die bereits bestehenden Überlappungen zwischen Sektoren des Funkzugangsnetzes 104 ausgenutzt. Zudem ist vorzugsweise vorgesehen, die Ausdehnung bzw. den Sendebereich zumindest eines Teils der nichtabgeschalteten Sektoren zu vergrößern. Hierdurch wird eine größere Überlappung benachbarter Sektoren erzielt und auf diese Weise das Abschaltpotenzial vergrößert. Im Normalbetrieb würde die Vergrößerung der Ausdehnung von Sektoren in der Regel zu unerwünschten Interferenzen zwischen benachbarten Sektoren führen. Diese treten jedoch im Energiesparbetrieb aufgrund der Abschaltung von Sektoren nicht auf.

Die Ausdehnung einer Funkzelle ergibt sich bei Verwendung von Sektorantennen insbesondere infolge der Abwärtsneigung (Downtilt) der Strahlrichtung der die Zelle versorgenden Antenne, wobei eine geringe Abwärtsneigung zu einer größeren Sendeweite und damit einer größeren Zellausdehnung führt. Die Abwärtsneigung kann durch eine physikalische Aufhängung des Antennenkörpers mit einer entsprechenden Neigung gegenüber der Vertikalen oder durch die elektrische Konfiguration der Antenne erzielt werden. Die Anpassung der Abwärtsneigung kann im laufenden Betrieb vorgenommen werden und erfolgt durch eine entsprechende Veränderung der Neigung des Antennenkörpers mittels eines geeigneten Stellmotors (Remote Mechanical Tilt - RMT) oder durch eine Anpassung der elektrischen Eigenschaften der Antenne (Remote Electrical Tilt - RET). Die Abwärtsneigung kann grundsätzlich bis auf einen minimalen Wert verringert werden, bei dem die Abdeckung des Sektors noch sichergestellt ist. Die minimale Abwärtsneigung ist insbesondere abhängig von der Höhe, in der die Antenne angebracht ist, wobei höher angeordnete Antennen eine geringere minimale Abwärtsneigung ermöglichen.

Der Senderadius bzw. der Sendebereich ist darüber hinaus abhängig von der Sendeleistung der Antenne (und der Mobilstationen in der von der Antenne versorgten Funkzelle). Daher kann der Zellenradius bzw. die Zellengröße alternativ oder zusätzlich zu der Anpassung der Abwärtsneigung der Strahlrichtung auch grundsätzlich durch eine Anpassung der Sendeleistung der Antenne verändert werden. Zur Vergrößerung des Senderadius ist es jedoch erforderlich, dass die maximale Sendeleistung der Antenne im Normalbetrieb nicht erreicht wird, da sonst eine Steigerung der Sendeleistung nicht möglich ist.

Zur Auswahl der Sektoren, die im Energiesparbetrieb abgeschaltet werden, werden zunächst Überlappungen von Sektoren des Funkzugangsnetzes 104 ermittelt. Dies geschieht vorzugsweise unter Berücksichtigung einer maximierten Ausdehnung der Sektoren. Die Ermittlung erfolgt in einer Ausgestaltung anhand einer numerischen Berechnung, die sukzessive für sämtliche Basisstationen 101i bzw. Sektoren des Funkzugangsnetzes 104 durchgeführt wird. Bei der Berechnung wird in einer Ausführungsform für Stichprobenpunkte innerhalb der einzelnen Sektoren bestimmt, ob diese durch benachbarte Sektoren überdeckt werden oder nicht. Anhand der für die Stichprobenpunkte eines Sektors jeweils ermittelten Überlagerungssituationen wird dann die Überlappungssituation für den kompletten Sektor bestimmt.

Als Sendeweite in einem Sektor, die dem Zellenradius des Sektors entspricht, wird in einer Ausgestaltung die Entfernung zu der dem Sektor zugeordneten Antenne angesehen, in welcher der Pfadverlust in Senderichtung der Antenne einen Schwellenwert überschreitet. Der Schwellenwert entspricht dem maximalen erlaubten Pfadverlust und wird in Abhängigkeit von den Mobilfunkdiensten ausgewählt, die im Energiesparbetrieb zugänglich sein sollen. Hierdurch wird insbesondere berücksichtigt, dass Mobilfunkdienste, die eine höhere Datenübertragungsrate bzw. eine hohe Dienstgüte erfordern, einen höheren Empfangspegel am jeweiligen Empfangsort benötigen.

Der Pfadverlust wird aus dem Ausbreitungsverlust des Funksignals sowie weiteren Faktoren wie dem Antennengewinn und den Zuleitungsverlusten bestimmt. Zur Berechnung des Ausbreitungsverlusts wird ein dem Fachmann an sich bekanntes Pfadverlustmodell herangezogen. Mittels eines solchen Modells kann der Ausbreitungsverlust zunächst ohne Eingang der Abwärtsneigung aus der verwendeten Sendefrequenz und der bekannten Montagehöhe der Antenne über dem Boden bestimmt werden (für die Empfangshöhe kann für alle Sektoren ein einheitlicher vorgegebener Schätzwert verwendet werden). Ferner wird die Bebauung im geografischen Gebiet des Sektors berücksichtigt. Wenn es sich bei dem Funkzugangsnetz 104 um ein UTRAN handelt, kann zur Berechnung das COST-231-Hata-Modell herangezogen werden, in dem der Pfadverlust in Abhängigkeit von dem Bebauungstyp des betreffenden Gebiets bestimmt werden kann, oder es kann das Cost-Walfish-Ikegami-Modell herangezogen werden.

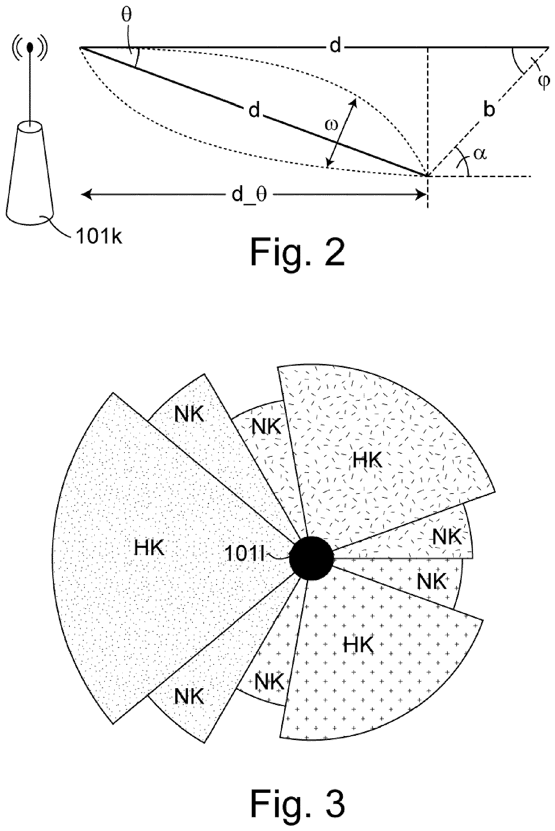

Der Einfluss der Abwärtsneigung der Strahlrichtung auf den Senderadius wird in der Figur 2 für eine Basisstation 101k veranschaulicht. Gemäß der dort dargestellten Skizze wird der Senderadius d_θ, der sich infolge einer Abwärtsneigung θ der Strahlrichtung ergibt, anhand der folgenden Beziehung aus dem Senderadius d bestimmt, der anhand des zuvor genannten Pfadverlustmodells berechnet worden ist:

$$d\_\theta = d - b \cdot \cos(\alpha),$$

wobei gilt

$$b = \sqrt{2d^2 - 2d^2 \cdot \cos(\theta)}$$

$$\alpha = 180° - \theta - \varphi$$

$$\varphi = (180° - \theta)/2$$

Die Winkel θ α und ω sind ebenso wie die Senderadien d_θ und d in der Figur 2 veranschaulicht. In einer Ausgestaltung wird die zuvor angegebene Beziehung verwendet, um den Senderadius d_θ für eine bestimmte Abwärtsneigung der Strahlrichtung in einem Sektor zu bestimmen. In einer weiteren Ausgestaltung wird zusätzlich die auch in der Figur 2 veranschaulichte vertikale Strahlausdehnung $\overline{\omega}$ bei der Berechnung des Senderadius' berücksichtigt. In dieser Ausgestaltung wird anstelle der Abwärtsneigung θ der Ausdruck υ-$\overline{\omega}$/2 in die zuvor angegebenen Formeln eingesetzt.

Das von den Sektoren überdeckte geografische Gebiet wird modellhaft durch eine geeignete geometrische Form beschrieben, deren Ausdehnung aus dem in der zuvor beschriebenen Weise ermittelten Senderadius bestimmt wird. Die geografischen Gebiete, die von den einzelnen Sektoren einer Basisstationen 101i überdeckt werden, werden dabei vorzugsweise anhand individueller Senderadien ermittelt, die jeweils in Abhängigkeit von der sektorspezifischen Bebauung berechnet werden. Als Form der Gebiete können für Sektorantennen insbesondere Kreissegmente zugrunde gelegt werden, deren Radien den jeweils ermittelten Senderadien entsprechen. In einer Implementierung ist vorgesehen, die räumliche Ausdehnung des von einer Sektorantenne versorgten Sektors durch drei aneinander angrenzende Kreissegmente mit unterschiedlichen Radien zu beschreiben. In weiteren Ausführungsbeispielen kann die räumliche Ausdehnung auch durch mehr als drei, also z.B. mittels 10 oder 50 angrenzenden Kreissegmenten mit unterschiedlichen Radien beschrieben werden. Weiterhin kann eine Modellierung auch unter Verwendung einer Bebauungskarte des betreffenden geografischen Gebiets anhand von Raytracingmethoden vorgenommen werden.

Figur 3 zeigt beispielhaft eine Modellbildung mit drei Kreissegmenten für eine Basisstation 101l, die drei Sektoren versorgt. Das mittlere Kreissegment HK jedes Sektors repräsentiert dessen Hauptsendekeule der dem Sektor zugeordneten Antenne und besitzt vorzugsweise eine vordefinierte Winkelausdehnung. Der Radius des mittleren Kreissegments HK entspricht dem zuvor ermittelten Senderadius. Die beiden äußeren Kreissegmente NK jedes Sektors repräsentieren die Nebensendekeulen. Der Berechnung der Senderadien der Nebensendekeulen eines Sektors wird eine vorgegebene Nebenkeulendämpfung zugrunde gelegt, die den Radius der Kreissegmente bestimmt und insbesondere 3 dB betragen kann. Wird ein Sektor nicht von einer Sektorantenne, sondern von einer anders ausgestalteten Antenne versorgt, wird der Sektor durch eine entsprechend angepasste Form modelliert, bei der es sich im Falle einer Rundstrahlantenne beispielsweise um eine Kreisscheibe handeln kann.

Um die Überlagerungssituation für eine bestimmte Basisstation 101i zu ermitteln, die im Folgenden als Hauptstandort bezeichnet wird, wird zunächst eine Vorauswahl der Basisstationen 101i getroffen, deren Sektoren aufgrund ihrer Zellenradien die Sektoren des Hauptstandorts überlagern können. Für den Hauptstandort werden hierbei vorzugsweise die Zellenradien unter Berücksichtigung der Abwärtsneigungen der Strahlrichtungen im Normalbetrieb zugrunde gelegt, während für die übrigen Basisstationen 101i vergrößerte Zellenradien zugrunde gelegt werden, die sich infolge einer minimalen Abwärtsneigung der Strahlrichtungen bei diesen Basisstationen 101i ergeben. Die bei der Vorauswahl ermittelten Basisstationen 101i werden im Folgenden auch als Nachbarstandorte bezeichnet. In einer Ausgestaltung werden als Nachbarstandorte die Basisstationen 101i ausgewählt, bei denen die Summe aus dem maximalen Zellenradius der Basisstation 101i (S_max,i) und dem maximalen Senderadius des Hauptstandorts (S_max) wenigstens der Entfernung Di zwischen der Basisstation 101i und dem Hauptstandort entspricht, d.h. bei denen gilt:

$$S\_max,i + S\_max \geq Di$$

Als maximaler Zellenradius einer Basisstation 101i wird hierbei das Maximum der Zellradien der Basisstationen 101i bezeichnet.

Nachdem bei der Vorauswahl die Nachbarstandorte des Hauptstandorts ermittelt worden sind, werden die Sektoren ermittelt, die vollständig von einem oder mehreren Sektoren der Nachbarstandorte überlappt werden. Diese Sektoren werden nachfolgend auch als Kandidatensektoren für eine Abschaltung bezeichnet. Die Ermittlung wird auf der Grundlage der geografischen Positionen der Standorte und den von ihren Sektoren überdeckten geografischen Gebieten vorgenommen. Die geografischen Gebiete, die von den Sektoren des Hauptstandorts überdeckt werden, werden zu diesem Zweck wiederum anhand der Abwärtsneigungen der Strahlrichtungen im Normalbetrieb bestimmt, während die von den Sektoren der Nachbarstandorte überdeckten geografischen Gebiete anhand der minimalen Abwärtsneigung der Strahlrichtungen berechnet werden. Neben den überlappten Sektoren des Hauptstandorts können bei der Ermittlung vorzugsweise zudem die Sektoren der Nachbarstandorte ermittelt werden, welche für die Überdeckung der überlappten Sektoren des Hauptstandorts

sorgen und hierin auch als Überlappungssektoren bezeichnet werden.

In einer Ausgestaltung erfolgt die Ermittlung der Kandidatensektoren des Hauptstandorts und der Überlappungssektoren der Nachbarstandorte durch Einzelberechnungen der Überlappung an vorgegebenen Stichprobenpunkten. Vorzugsweise wird dabei ein äquidistantes Gitter von Stichprobenpunkten zugrunde gelegt, das die Sektoren des Hauptstandorts bzw. das von diesen überdeckte geografische Gebiet abdeckt. Für jeden der Stichprobenpunkte wird geprüft, ob er innerhalb eines Sektors eines Nachbarstandorts liegt und in welchen Sektor eines Nachbarstandorts er ggf. liegt. Dann wird für die Sektoren des Hauptstandorts jeweils geprüft, ob alle in den Sektoren angeordneten Stichprobenpunkte in einem Sektor eines Nachbarstandorts liegen. Bei den Sektoren des Hauptstandorts, bei denen dies der Fall ist, handelt es sich um Kandidatensektoren für eine Abschaltung im Energiesparbetrieb. Zumindest für die Stichprobenpunkte der Kandidatensektoren werden zudem die Sektoren der Nachbarstandorte ermittelt und gespeichert, welche die Stichprobenpunkte überdecken und die Überlappungssektoren der Kandidatensektoren bilden, so dass zu jedem Kandidatensektor auch die zugehörigen Überlappungssektoren gespeichert werden können.

Bei der Bestimmung der Kandidatensektoren wird eine maximierte Sendeweite zugrunde gelegt, die sich infolge einer minimalen Abwärtsneigung der Strahlrichtungen in den Überlappungssektoren ergibt. Es zeigt sich jedoch, dass eine vollständige Überlappung der Kandidatensektoren oftmals auch bei einer geringen Sendeweite bzw. einer größeren Abwärtsneigung erreicht werden kann. Insbesondere in Überlappungssektoren, in denen die Strahlrichtung im Normalbetrieb eine größere Abwärtsneigung aufweist, braucht daher oftmals nicht die minimale Abwärtsneigung eingestellt zu werden. Vielmehr kann oftmals eine Abwärtsneigung eingestellt werden, die eine geringere Abweichung von der Abwärtsneigung im Normalbetrieb beinhaltet. Die Einstellung einer geringeren Sendereichweite hat den Vorteil, dass Interferenzen im Energiesparbetrieb des Funkzugangsnetzes 104 verhindert bzw. minimiert werden.

Nach der Ermittlung der Kandidatensektoren für die Abschaltung wird daher in einem weiteren Schritt für jeden Kandidatensektor eine optimierte Konfiguration der Abwärtsneigungen der Strahlrichtungen in den Überlappungssektoren bestimmt. Die optimierte Konfiguration wird vorzugsweise so ermittelt, dass der Kandidatensektor vollständig überdeckt wird und in den Überlappungssektoren die einzustellenden Abweichungen der Abwärtsneigung gegenüber den Abwärtsneigungen im Normalbetrieb gleichzeitig minimal sind. Zu diesem Zweck wird die Überlappung des Kandidatensektors durch die Überlappungssektoren für verschiedene Kombinationen von Abwärtsneigungen der Strahlrichtungen in den Überlappungssektoren berechnet und aus den Ergebnissen die optimale Konfiguration ausgewählt, die nachfolgend auch als Abschaltkonfiguration bezeichnet wird. Die Berechnung kann in der zuvor bereits beschriebenen Weise anhand von Stichprobenpunkten innerhalb des Kandidatensektors vorgenommen werden.

In einer Ausgestaltung werden zur Bestimmung der Abschaltkonfiguration der Abwärtsneigungen der Strahlrichtungen in den Überlappungssektoren die Überlappungen des Kandidatensektors für alle möglichen zulässigen Kombinationen von Abwärtsneigungen der Strahlrichtungen der Überlappungssektoren (beispielsweise mit einer Rasterung der Abwärtsneigungen von 1 Grad) berechnet. Es werden dann die Kombinationen ausgewählt, bei denen eine vollständige Überlappung des Kandidatensektors besteht. Aus diesen wird die Kombination ausgewählt, bei der die Änderungen der Abwärtsneigungen der Strahlrichtungen in den Überlappungssektoren gegenüber den Abwärtsneigungen im Normalbetrieb minimal sind.

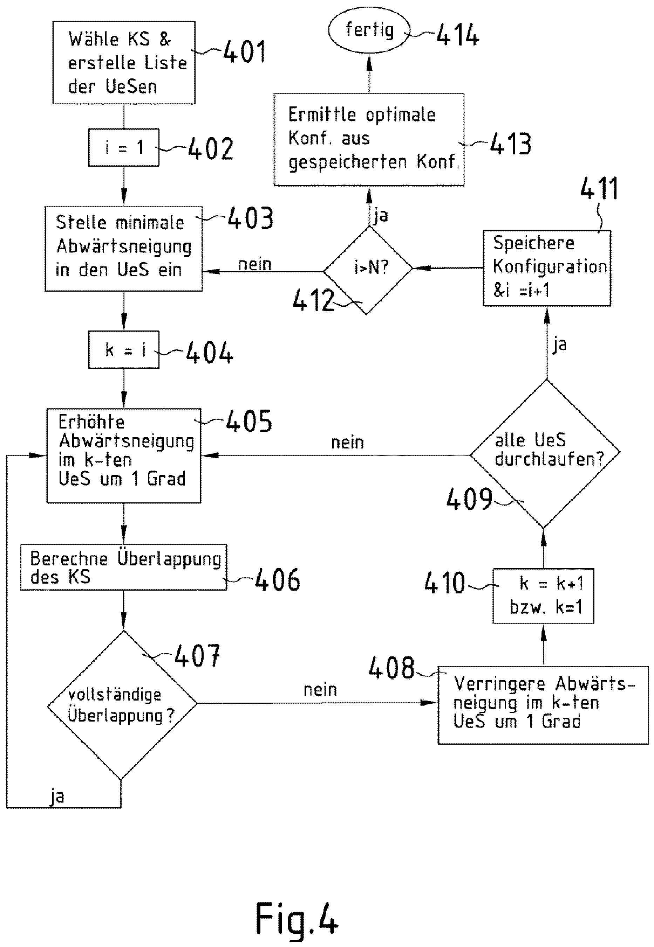

Eine Berechnung der Überlappungen für alle möglichen Kombinationen von Abwärtsneigungen der Strahlrichtungen in den Überlappungssektoren ist jedoch sehr rechen- bzw. zeitintensiv. Daher wird in einer alternativen Ausführungsform eine Heuristik zur Bestimmung der Abschaltkonfiguration eingesetzt, die unter Bezugnahme auf Figur 4 erläutert wird. Für einen bestimmten Kandidatensektor erfolgt die Bestimmung auf der Grundlage einer Liste der zuvor ermittelten Überlappungssektoren. Die Liste wird vorzugsweise nach der Anzahl der Stichprobenpunkte des Kandidatensektors sortiert, die von den einzelnen Überlappungssektoren überdeckt werden. Dabei steht an erster Stelle der Überlappungssektor, der die größte Anzahl von Stichprobenpunkten des Kandidatensektors überdeckt, an zweiter Stelle steht der Überlappungssektor, der die zweitgrößte Anzahl von Stichprobenpunkten überdeckt usw. Alternativ ist jedoch auch eine andere Sortierung der Liste, insbesondere auch eine zufällige Sortierung möglich.

Das heuristische Verfahren sieht in einer Ausführungsform vor, dass für die Überlappungssektoren jeweils die maximale Abwärtsneigung der Strahlrichtung bestimmt wird, bei welcher der Kandidatensektor vollständig überdeckt wird. Für jeden Überlappungssektor werden zudem ausgehend von der maximalen Abwärtsneigung in diesem Sektor sukzessive die maximalen Abwärtsneigungen für die ggf. vorhandenen übrigen Überlappungssektoren ermittelt, bei denen eine vollständige Überdeckung des Kandidatensektors gegeben ist. Auf diese Weise ergibt sich für jeden Überlappungssektor eine Konfigurationen von Abwärtsneigungen in sämtlichen Überlappungssektoren des Kandidatensektors. Aus den einzelnen Konfigurationen wird sodann die Konfiguration ausgewählt, bei der die Abweichungen zur Konfiguration der Abwärtsneigungen in sämtlichen Überlappungssektoren minimal sind. Zur Ermittlung der maximalen Abwärtsneigung in einem Überlappungssektor wird die Abwärtsneigung der Strahlrichtung in dem Überlappungssektor ausgehend von der minimalen Abwärtsneigung schrittweise erhöht, und nach jeder Erhöhung wird die Überlappung des Kandidatensektors in der zuvor beschriebenen Weise bestimmt. Dabei werden Erhöhungen solange durchgeführt, bis in einem Schritt keine vollständige Überdeckung des Kandidatensektors mehr gegeben ist. Die maximale Abwärtsneigung entspricht dann der im vorletzten Schritt zugrunde gelegten Abwärtsneigung.

In der Figur 4 wird das heuristische Verfahren schematisch anhand eines Ablaufdiagramms veranschaulicht. Zunächst wird im Schritt 401 der Kandidatensektor (KS) ausgewählt, für den die Ermittlung durchgeführt werden soll. Zudem wird für diesen Kandidatensektor in dem Schritt 401 die zuvor beschriebene Liste von Überlappungssektoren (UeSen) erstellt, wobei davon ausgegangen wird, dass diese Liste N Überlappungssektoren umfasst. Sodann werden Berechnungen jeweils einer Konfiguration maximaler Abwärtsneigungen für die verschiedenen Überlappungssektoren (UeS) der Liste sukzessive durchgeführt. Begonnen wird mit der Berechnung einer Konfiguration für den ersten Überlappungssektor. Zu diesem Zweck wird der Zähler i in dem Schritt 402 auf den Wert 1 gesetzt.

Die Berechnung einer Konfiguration maximaler Abwärtsneigungen für einen Überlappungssektor erfolgt ausgehend von einer Startkonfiguration, bei der in allen Überlappungssektoren die minimalen Abwärtsneigungen eingestellt sind. Diese Startkonfiguration wird in dem Schritt 403 eingestellt. Die Berechnung der Konfiguration maximaler Abwärtsneigungen für den i-ten Überlappungssektor beginnt mit der Bestimmung der maximalen Abwärtsneigung für den i-ten Überlappungssektor. Daher wird in dem Schritt 404 zunächst der Zähler k, der den Überlappungssektor festlegt, für den die maximale Abwärtsneigung ermittelt wird, auf den Wert i gesetzt. Nachdem für den i-ten Überlappungssektor in dem Schritt 408 die maximale Abwärtsneigung bestimmt worden ist, wird unter Zugrundelegung der bestimmten Abwärtsneigung für den i-ten Überlappungssektor die maximale Abwärtsneigung für den nächsten Überlappungssektor (k = i+1) zugrunde gelegt. Sodann wird die Berechnung der maximalen Abwärtsneigung für die übrigen Überlappungssektoren der Liste sukzessive fortgeführt, bis in dem Schritt 409 festgestellt wird, dass alle Überlappungssektoren durchlaufen worden sind. Die Berechnung der maximalen Abwärtsneigung für einen Überlappungssektor erfolgt dabei unter Zugrundelegung der zuvor ermittelten Abwärtsneigungen der vorangegangenen Überlappungssektoren. Um dabei alle Überlappungssektoren zu durchlaufen wird in dem Schritt 410 der Wert des Zählers k bei jedem Durchlauf um den Wert 1 erhöht bzw. nach dem Erreichen des Endes der Liste der Überlappungssektoren ggf. wieder auf den Wert 1 gesetzt. Es werden alle Überlappungssektoren durchlaufen, d.h., dass für jedes i die Liste der Überlappungssektoren vollständig durchlaufen wird. Nachdem alle Überlappungssektoren durchlaufen worden sind, wird die sich aus den für die einzelnen Überlappungssektoren ermittelten maximalen Abwärtsneigungen zusammensetzende Konfiguration in dem Schritt 411 gespeichert.

Zur Bestimmung der maximalen Abwärtsneigung im k-ten Überlappungssektor wird die Abwärtsneigung zunächst ausgehend von der minimalen Abwärtsneigung, die in der Eingangskonfiguration des Schritts 405 vorliegt, um einen vorgegebenen Betrag von beispielsweise 1 Grad erhöht (Schritt 405). Dann wird in der zuvor bereits beschriebenen Weise die Überlappung des Kandidatensektors durch die Überlappungssektoren unter Verwendung der Stichprobenpunkte berechnet (Schritt 406). Im Anschluss wird in dem Schritt 407 geprüft, ob eine vollständige Überdeckung des Kandidatensektors durch die Überlappungssektoren gegeben ist. Die Schritte 405-407 werden solange wiederholt, bis in dem Schritt 407 festgestellt wird, dass keine vollständige Überlappung des Kandidatensektors besteht. Sodann wird in dem Schritt 408 die Abwärtsneigung für den k-ten Überlappungssektor um den vorgegebenen Betrag reduziert.

In der zuvor beschriebenen Weise wird für jeden Überlappungssektor des Kandidatensektors eine Konfiguration maximaler Abwärtsneigungen bestimmt. Wenn in dem Schritt 412 festgestellt wird, dass für alle Überlappungssektoren eine solche Konfiguration vorliegt, wird in dem Schritt 413 aus den zuvor ermittelten und gespeicherten Konfiguration die Konfiguration bestimmt, bei der die Änderungen der Abwärtsneigungen in den Überlappungssektoren gegenüber den im Normalbetrieb eingestellten Abwärtsneigung minimal ist. Nachdem diese Konfiguration ermittelt worden ist, ist das Verfahren für den betreffenden Kandidatensektor abgeschlossen (Schritt 414).

In der zuvor beschriebenen Weise wird für jeden Sektor des Funkzugangsnetzes 104 ermittelt, ob es sich um einen Kandidatensektor handelt. Auf diese Weise werden sämtliche Kandidatensektoren und die zugehörigen Überlappungssektoren des Funkzugangsnetzes 104 bestimmt. Für jeden ermittelten Kandidatensektor wird zudem eine Konfiguration der Abwärtsneigungen der Strahlrichtungen in den Überlappungssektoren ermittelt. Aus diesen Angaben werden dann Kombinationen abzuschaltender Kandidatensektoren nach vorgegebenen Kriterien bestimmt.

In weiteren Ausführungsformen wird alternativ oder zusätzlich zur Optimierung der Senderadien der Überlappungssektoren durch eine Anpassung der Abwärtsneigungen der Strahlrichtungen eine Anpassung der Sendeleistung vorgenommen (wenn im Normalbetrieb nicht die maximale Sendeleistung eingesetzt wird). Hierzu wird analog zur Anpassung der Abwärtsneigungen vorgegangen. D.h., zunächst wird die Überlappung der Sektoren des Funkzugangsnetzes 104 unter Zugrundelegung einer maximalen Sendeleistung bestimmt, um die Kandidatensektoren für eine Abschaltung im Energiesparbetrieb zu ermitteln. Dies geschieht in der zuvor beschriebenen Weise anhand von Einzelberechnung für Stichprobenpunkte in den Sektoren. Nachdem die Kandidatensektoren ermittelt worden sind, werden für die Überlappungssektoren optimale Konfigurationen der Sendeleistungen ermittelt, in denen die Sendeleistungen sich minimal von den Sendeleistungen im Normalbetrieb unterscheiden. Zu diesem Zweck kann das zuvor beschriebene heuristische Verfahren analog durchgeführt werden. Die Optimierung dient auch bei einer Anpassung der Sendeleistungen der Überlappungssektoren zur Minimierung von Interferenzen, die bei zu großen Senderadien der Überlappungssektoren auftreten können. Nach der Ermittlung der Kandidatensektoren und der optimierten Sendeleistungen wird auch in dieser Ausgestaltung die Abschaltkombinationen für den Energiesparbetrieb ermittelt, d.h. die Kombination der im Energiesparbetrieb abzuschaltenden Kandidatensektoren. Eine Anpassung der Sendeleistung zur Erhöhung der Sendeweite ist insbesondere für solche Überlappungssektoren zweckmäßig, deren Antenne bereits im Normalbetrieb eine geringe Abwärtsneigung aufweist. Ferner kann der Mechanismus zur Anpassung des Senderadius von der Art der jeweils verwendeten Antenne ausgewählt werden. Insbesondere kann vorgesehen sein, den Senderadius durch Veränderung der Sendeleistung anzupassen, wenn dies durch eine Veränderung der Antennenneigung nicht möglich ist, wie es beispielsweise bei Rundstrahlantennen der Fall ist.

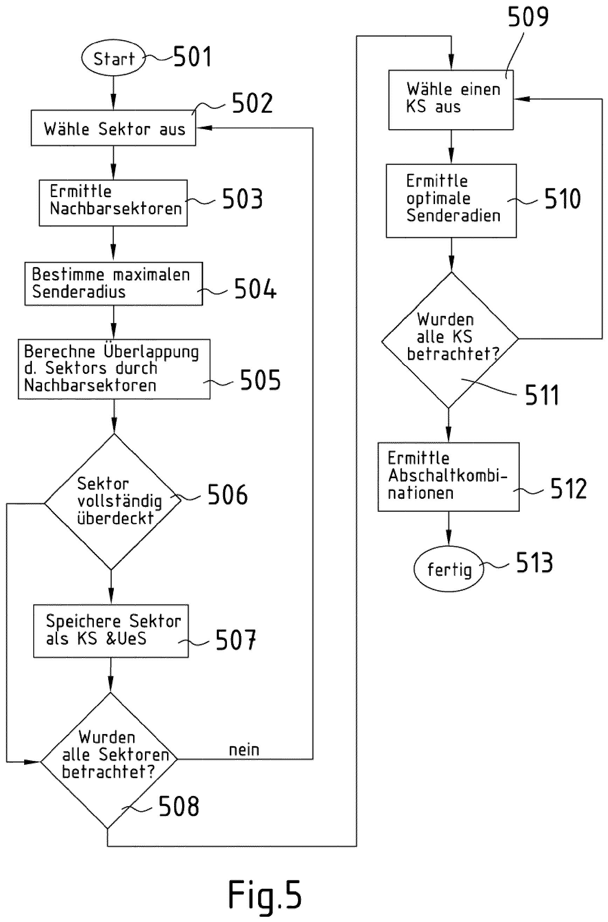

Die Ermittlung der Abschaltkombinationen wird somit so durchgeführt, wie es in der Figur 5 schematisch anhand eines Ablaufdiagramms dargestellt ist. Nach der Initiierung (Schritt 501) erfolgt zunächst die Ermittlung der Kandidatensektoren. Hierzu wird in dem Schritt 502 zunächst ein Sektor ausgewählt. Für den ausgewählten Sektor werden in dem Schritt 503 die Nachbarsektoren ausgewählt, die als Überlappungssektoren des Sektors in Frage kommen. Dies geschieht in der zuvor beschriebenen Weise durch eine Vorauswahl der Nachbarstandorte der den Sektor versorgenden Basisstation. Sodann wird im Schritt 505 die Überlappung des Sektors anhand von Einzelberechnungen für Stichprobenpunkte in dem Sektor berechnet. Dies geschieht unter Zugrundelegung der maximierten Senderadien der Sektoren der Nachbarstandorte, die in dem Schritt 504 anhand einer minimalen Abwärtsneigung der Strahlrichtungen in den Sektoren und/oder anhand einer maximalen Sendeleistung bestimmt wird. Nach der Berechnung der Überlappung wird in dem Schritt 506 geprüft, ob der ausgewählte Sektor vollständig überdeckt wird. Ist dies der Fall, wird der Sektor als Kandidatensektor gespeichert. Zu einem Kandidatensektor werden zudem die zugehörigen Überlappungssektoren hinterlegt (Schritt 507). Die Schritte 502-507 werden für alle Sektoren des Funkzugangsnetzes 104 ausgeführt. Hierzu wird in dem Schritt 508 nach der Untersuchung jedes Sektors geprüft, ob alle Sektoren betrachtet worden sind. Ist dies nicht der Fall, wird in dem Schritt 502 ein weiterer Sektor ausgewählt.

Wenn in dem Schritt 508 festgestellt worden ist, dass alle Sektoren betrachtet worden sind, wird nachfolgend für die ermittelten Kandidatensektoren die Optimierung der Senderadien der Überlappungssektoren vorgenommen. Dies wird sukzessive für den Kandidatensektor einzeln durchgeführt. Hierzu wird in dem Schritt 509 zunächst ein Kandidatensektor ausgewählt. Dann wird in Bezug auf diesen Kandidatensektor in dem Schritt 510 eine Konfiguration der Sendeweiten der Überlappungssektoren ermittelt, bei welcher der Kandidatensektor vollständig überdeckt wird und die Abweichungen den Senderadien im Normalbetrieb minimal sind. Die Anpassung der Senderadien erfolgt dabei wie zuvor beschrieben durch eine Veränderung der Abwärtsneigung der Strahlrichtungen in den Überlappungssektoren und/oder eine Veränderung der Sendeleistung der die Überlappungssektoren versorgenden Antennen. Die Schritte 509 und 510 werden für alle zuvor ermittelten Kandidatensektoren durchgeführt. Um dies zu gewährleisten, wird in dem Schritt 511 nach der Untersuchung jedes Kandidatensektors geprüft, ob alle Kandidatensektoren betrachtet worden sind. Ist dies nicht der Fall, wird in dem Schritt 509 ein weiterer Sektor ausgewählt.

Wenn in dem Schritt 511 festgestellt worden ist, dass für alle Kandidatensektoren eine Konfiguration optimaler Senderadien der Überlappungssektoren ermittelt worden ist, werden in dem Schritt 512 die Abschaltkombinationen für den Betrieb des Funkzugangsnetzes 104 im Energiesparbetrieb ermittelt, bevor das Verfahren in dem Schritt 513 beendet wird.

Die Ermittlung der Abschaltkombinationen erfolgt anhand von vorgegebenen Kriterien, die vorzugsweise derart festgelegt werden, dass eine lückenlose Funkabdeckung des von dem Funkzugangsnetz 104 im Normalbetrieb überdeckten geografischen Gebiets im Energiesparbetrieb erhalten bleibt. Ferner werden anhand der Kriterien vorzugsweise die Abschaltkombinationen ermittelt, die zu einer möglichst großen Energieeinsparung gegenüber dem Normalbetrieb führen. Solche Abschaltkombinationen werden im Folgenden auch als maximale Abschaltkombinationen bezeichnet. Eine Abschaltkombination umfasst die abzuschaltenden Kandidatensektoren sowie die zugehörige Konfiguration der Abwärtsneigungen und/oder Sendeleistungen der Überlappungssektoren der abzuschaltenden Kandidatensektoren. Wenn ein Überlappungssektor mehreren Kandidatensektoren einer Abschaltkombination zugeordnet ist, dann können für den Überlappungssektor mehrere Konfigurationen für die Abwärtsneigung und/oder die Sendeleistung vorliegen, die jeweils für einen anderen Kandidatensektor bestimmt worden sind. In diesem Fall wird innerhalb der Abschaltkombination die Konfiguration mit dem größten Senderadius gewählt, um eine lückenlose Abdeckung des von dem Funknetz überdeckten geografischen Gebiets zu gewährleisten.

Aus den möglichen Abschaltkombinationen werden als maximale Abschaltkombinationen in einer Ausgestaltung Abschaltkombinationen ermittelt, die folgende Kriterien erfüllen:

a) Die Überlappungssektoren der abzuschaltenden Kandidatensektoren werden in der Abschaltkombination nicht abgeschaltet

b) Kein weiterer Kandidatensektor kann abgeschaltet werden, ohne die vollständige Netzabdeckung zu verlieren.

c) Es werden möglichst viele Basisstationen 101i vollständig abgeschaltet (d.h. es werden alle Sektoren der Basisstationen 101i abgeschaltet) und die Anzahl der abgeschalteten Einzelsektoren ist maximal.

Das Kriterium a) stellt eine lückenlose Netzabdeckung sicher, da verhindert wird, dass Sektoren abgeschaltet werden, die ihrerseits zur Versorgung von abgeschalteten Sektoren erforderlich sind. Durch das Kriterium b) wird sichergestellt, dass eine maximale Anzahl von Sektoren im Energiesparbetrieb abgeschaltet wird. Das Kriterium c) trägt der Tatsache Rechnung, dass die Basisstationen 101i neben den sektorspezifischen Komponenten, die einzelnen Sektoren zugeordnet sind, auch gemeinsam genutzte Komponenten umfassen. Wenn alle Sektoren einer Basisstation 101i abgeschaltet werden, dann können auch die gemeinsam genutzten Komponenten abgeschaltet werden, was bei der Abschaltung einzelner Sektoren nicht möglich ist. Damit führt das Kriterium c) zu einer höheren Energieeinsparung.

Die maximalen Abschaltkombinationen können beispielsweise numerisch bestimmt werden, indem alle bzw. eine Mehrzahl von Abschaltkombinationen einzeln untersucht werden. Für diese Abschaltkombination wird dann ermittelt, ob die zuvor genannten Bedingungen erfüllt sind. Aus den ermittelten maximalen Abschaltkombinationen wird eine Abschaltkombination ausgewählt und in der Netzverwaltungseinheit 105 hinterlegt. Die Ermittlung der maximalen Abschaltkonfiguration kann gleichfalls in der Netzverwaltungseinheit 105 vorgenommen werden oder in einem mit der Netzverwaltungseinheit 105 verbundenen Datenverarbeitungssystem, dem die erforderlichen Eingangsgrößen, wie etwa die geografischen Positionen der Basisstationen 101i und die relevanten Konfigurationsparameter der Basisstationen 101i zugänglich gemacht werden. Die Abschaltkombination kann dann grundsätzlich solange verwendet werden, bis aufgrund einer Veränderung der Netzkonfiguration, die sich beispielsweise infolge der Ergänzung und/oder Entfernung von Basisstationen 101i ergeben kann, eine Neuberechnung erforderlich wird.

Wenn die Bedingungen für einen Eintritt in den Energiesparbetrieb vorliegen, steuert die Netzverwaltungseinheit 105 die Abschaltung der Kandidatensektoren, die in der ausgewählten Abschaltkombination enthalten sind, und die Anpassung der Senderadien für die übrigen Sektoren. Hierbei kann vorgesehen sein, dass die Sendeleistung in den abzuschaltenden Sektoren schrittweise reduziert wird, um die Senderadien dieser Sektoren zu verringern, und im Wesentlichen synchron die Vergrößerung der Senderadien der Überlappungssektoren erfolgt. Hierdurch kann auch während des Abschaltvorgangs eine lückenlose Netzabdeckung gewährleistet werden. Ein Eintritt in den Energiesparbetrieb kann insbesondere dann erfolgen, wenn die Netzverwaltungseinheit 105 bei der Auswertung der Verkehrsmessdaten des Funkzugangsnetzes 104 feststellt, dass die Netzlast in den Kandidatensektoren der hinterlegten Abschaltkombination und den zugehörigen Überlappungssektoren so gering ist, dass Mobilfunkendgeräte in den Kandidatensektoren durch die Überlappungssektoren übernommen werden können und nach der Übernahme noch eine hinreichende Kapazitätsreserve besteht.

Anhand des zuvor beschriebenen Vorgehens lassen sich insbesondere Abschaltkombinationen für ein gesamtes Funkzugangsnetz 104 oder für ein oder mehrere eine Mehrzahl von Basisstationen 101i umfassende Teilnetze eines Funknetzes ermitteln und im Energiesparbetrieb einstellen. Gleichfalls ist es möglich, Konfigurationen von Überlappungssektoren für einzelne Sektoren des Funkzugangsnetzes 104 zu bestimmen, um bei einem fehler- oder wartungsbedingten Ausfall der Sektoren eine vollständige Netzabdeckung zu gewährleisten. Um eine solche Konfiguration für einen ausgewählten Sektor zu ermitteln, wird bei dem zuvor beschriebenen Vorgehen dieser Sektor als einziger Kandidatensektor zugrunde gelegt. Für diesen wird dann zunächst geprüft, ob er aufgrund der Überlappung durch benachbarte Sektoren als Kandidatensektor in Betracht kommt (entsprechend den zuvor beschriebenen Schritten 502-507). Ist dies der Fall, wird eine optimale Konfiguration der Abwärtsneigungen und/oder Sendeleistungen bestimmt (entsprechend den Schritten 509 und 510). Die Ermittlung von Abschaltkombinationen entfällt in diesem Fall.

Weitere Varianten der Erfindung und ihrer Ausführung ergeben sich für den Fachmann aus der vorangegangenen Offenbarung, den Figuren und den Patentansprüchen.

Obwohl die Erfindung in den Zeichnungen und der vorausgegangenen Darstellung im Detail beschrieben wird, sind ist diese Darstellungen illustrativ und beispielhaft und nicht einschränkend zu verstehen. Insbesondere ist die Erfindung nicht auf die erläuterten Ausführungsbeispiele beschränkt.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

**Patentansprüche**

1. Verfahren zum Ermitteln von Ressourcen eines Funkzugangsnetzes, die bei geringer Netzauslastung abschaltbar sind, wobei das Verfahren folgende Schritte umfasst:

- Ermitteln einer Überlappung wenigstens eines Sektors einer Basisstation (101i) des Funkzugangsnetzes (104) durch wenigstens einen Sektor einer umliegenden Basisstation (101i) des Funkzugangsnetzes (104), wobei die Überlappung des Sektors mittels numerischer Berechnung anhand von Stichprobenpunkten innerhalb des Sektors in Abhängigkeit von einer Sendeweite des wenigstens einen Sektor der umliegenden Basisstation (101i) des Funkzugangsnetzes (104) erfolgt und die Sendeweite in Abhängigkeit von wenigstens einem Parameter des wenigstens einen Sektor der umliegenden Basisstation (101i) bestimmt werden,
- Bestimmen wenigstens eines Kandidatensektors für eine Abschaltung, wenn die Stichprobenpunkte in dem Kandidatensektor innerhalb des wenigstens einen Sektor umliegender Basisstationen (101i) liegen,
- Auswählen einer Kombination abzuschaltender Sektoren aus den Kandidatensektoren und Abschalten der Kandidatensektoren der ausgewählten Kombination, und
- wobei für den Kandidatensektor eine Konfiguration der Parameter der den Kandidatensektor überdeckenden Sektoren ermittelt wird, die bei einer möglichst minimalen Abweichung von der Konfiguration der Parameter im Normalbetrieb des Funkzugangsnetzes (104) zur vollständigen Überdeckung des Kandidatensektors führt, und wobei die ermittelte Konfiguration bei der Abschaltung der ausgewählten Sektoren eingestellt wird.

2. Verfahren nach Anspruch 1, wobei ein Senderadius des abzuschalten Kandidatensektors schrittweise reduziert wird, und synchron die Senderadien der Überlappungssektoren schrittweise vergrößert wird.

3. Verfahren nach Anspruch 1, wobei zur Ermittlung der Sendeweite mittels eines Pfadverlustmodells eine Entfernung zu der den Sektor versorgenden Basisstationen (101i) bestimmt wird, in welcher der Pfadverlust einen vorgegebenen Schwellenwert überschreitet.

4. Verfahren nach einem der vorangegangenen Ansprüche, wobei die Überlappung des Sektors der Basisstation (101i) durch einen Sektor einer umliegenden Basisstation (101i) nach Maßgabe einer die Sendeweite des weiteren Sektors maximierenden Konfiguration des Parameters des Sektors der umliegenden Basisstationen (101i) ermittelt wird.

5. Verfahren nach Anspruch 1 oder 4, wobei der Parameter eine Abwärtsneigung der Strahlrichtung der den Sektor versorgenden Antenne der umliegenden Basisstation (101i) und/oder eine Sendeleistung der Antenne umfasst.

6. Verfahren nach Anspruch 3 oder 4, wobei die die Sendeweite maximierende Konfiguration des Parameters eines Sektors eine minimale Abwärtsneigung der Strahlrichtung der den Sektor versorgenden Antenne und/oder eine maximale Sendeleistung der Antenne umfasst.

7. Verfahren nach einem der vorangegangenen Ansprüche, wobei eine Kombinationen abzuschaltender Kandidatensektoren ermittelt wird, bei der Sektoren, welche die in der Kombination enthaltenen Kandidatensektoren überdecken, nicht abgeschaltet werden.

8. Verfahren nach einem der vorangegangenen Ansprüche, wobei eine Kombination abzuschaltender Kandidatensektoren ermittelt wird, in der keine weiteren Sektoren abgeschaltet werden können, ohne die Abdeckung für ein Teilgebiet des von dem Funkzugangsnetz (104) überdeckten geografischen Gebiets zu verlieren.

9. Verfahren nach einem der vorangegangenen Ansprüche, wobei eine Kombination abzuschaltender Kandidatensektoren ermittelt wird, die eine maximale Anzahl von Basisstationen (101i) umfasst, bei denen alle Sektoren Kandidatensektoren sind.

10. Verfahren nach einem der vorangegangenen Ansprüche, wobei der Kandidatensektor und die den Kandidatensektor überdeckenden Sektoren der umliegenden Basisstationen (101i) unterschiedlichen Funkzugangstechnologien zugeordnet sind.

11. Computerprogramm umfassend einen Softwarecode, der so angepasst ist, dass er ein Verfahren nach einem der vorangegangenen Ansprüche ausführen kann, wenn er auf einer Datenverarbeitungsanlage ausgeführt wird.

12. System zum Ermitteln von Ressourcen eines Funkzugangsnetzes (104), die bei geringer Netzauslastung abschaltbar sind, wobei das System umfasst:

    - Mittel, die dazu ausgestaltet sind, eine Überlappung wenigstens eines Sektors einer Basisstationen (101i) des Funkzugangsnetzes (104) durch wenigstens einen Sektor einer umliegender Basisstationen (101i) des Funkzugangsnetzes (104) mittels numerischer Berechnung anhand von Stichprobenpunkten innerhalb des Sektors in Abhängigkeit von einer Sendeweite des wenigstens einen Sektor der umliegenden Basisstation (101i) des Funkzugangsnetzes (104) zu ermitteln,
    - Mittel, die Sendeweite in Abhängigkeit von wenigstens einem Parameter des wenigstens einen Sektor der umliegenden Basisstation (101i) zu bestimmen,
    - Mittel, die dazu ausgestaltet sind, wenigstens einen Kandidatensektor für eine Abschaltung in Abhängigkeit davon zu bestimmen, dass die Stichprobenpunkte in dem Kandidatensektor innerhalb von wenigstens einem Sektor umliegender Basisstationen (101i) liegen,
    - Mittel, die dazu ausgestaltet sind, eine Kombination abzuschaltender Sektoren aus den Kandidatensektoren auszuwählen und die Kandidatensektoren der ausgewählten Kombination abzuschalten, und
    - Mittel, die dazu ausgestaltet sind, für den Kandidatensektor eine Konfiguration der Parameter der den Kandidatensektor überdeckenden Sektoren zu ermitteln, die bei einer möglichst minimalen Abweichung von der Konfiguration der Parameter im Normalbetrieb des Funkzugangsnetzes (104) zur vollständigen Überdeckung des Kandidatensektors führt, und
    - Mittel, die dazu ausgestaltet sind, die ermittelte Konfiguration bei der Abschaltung der ausgewählten Sektoren einzustellen.

## Claims

1. A method for ascertaining resources of a radio access network that can be switched off during low network utilization, wherein the method comprises the following steps:

    - ascertaining an overlap of at least one sector of a base station (101i) of the radio access network (104) by at least one sector of a surrounding base station (101i) of the radio access network (104), wherein the overlap of the sector is determined by means of numerical calculation on the basis of random sample points within the sector as a function of a transmission range of the at least one sector of the surrounding base station (101i) of the radio access network (104), and the transmission range is determined as a function of at least one parameter of the at least one sector of the surrounding base station (101i),
    - determining at least one candidate sector to be switched off when the random sample points in the candidate sector fall within the at last one sector of surrounding base stations (101i),
    - selecting from among the candidate sectors a combination of sectors that are to be switched off, and switching off the candidate sectors of the selected combination, and

- whereby for the candidate sector, a configuration of the parameters of the sectors that cover the candidate sector is ascertained which, in the case of the smallest possible deviation from the configuration of the parameters during normal operation of the radio access network (104), leads to complete coverage of the candidate sector, and whereby the ascertained configuration is established when the selected candidate sectors are switched off.

2. The method according to claim 1, wherein a transmission radius of the candidate sector that is to be switched off is reduced incrementally, and synchronously, the transmission radii of the overlapping sectors are increased incrementally.

3. The method according to claim 1, wherein, in order to ascertain the transmission range, a path loss model is used to determine the distance from the base station (101i) servicing the sector at which the path loss exceeds a given threshold value.

4. The method according to one of the preceding claims, wherein the overlap of the sector of the base station (101i) by a sector of a surrounding base station (101i) is ascertained on the basis of a configuration of the parameter of the sector of the surrounding base stations (101i) that maximizes the transmission range of the other sector.

5. The method according to claim 1 or 4, wherein the parameter comprises a downtilt of the beam direction of the antenna of the surrounding base station (101i) that services the sector and/or the parameter comprises the transmission power of the antenna.

6. The method according to claim 3 or 4, wherein the configuration of the parameter of a sector that maximizes the transmission range comprises the minimum downtilt of the beam direction of the antenna that services the sector and/or the maximum transmission power of the antenna.

7. The method according to one of the preceding claims, wherein a combination of candidate sectors that are to be switched off is ascertained, whereby sectors that cover the candidate sectors contained in the combination are not switched off.

8. The method according to one of the preceding claims, wherein a combination of candidate sectors that are to be switched off is ascertained in which no further sectors can be switched off without losing coverage for a partial area of the geographic area covered by the radio access network (104).

9. The method according to one of the preceding claims, wherein a combination of candidate sectors that are to be switched off is ascertained that comprises a maximum number of base stations (101i) in which all of the sectors are candidate sectors.

10. The method according to one of the preceding claims, wherein the candidate sector and the sectors of the surrounding base stations (101i) covering the candidate sectors are associated with different radio access technologies.

11. A computer program comprising a software code that is adapted in such a way that it can carry out a method according to one of the preceding claims, when it is executed on a data processing system.

12. A system for ascertaining resources of a radio access network (104) that can be switched off during low network utilization, wherein the system comprises:

- means that are configured to ascertain an overlap of at least one sector of a base station (101i) of the radio access network (104) by at least one sector of a surrounding base station (101i) of the radio access network (104) by means of numerical calculation on the basis of random sample points within the sector as a function of a transmission range of the at least one sector of the surrounding base station (101i) of the radio access network (104),
- means for determining the transmission range as a function of at least one parameter of the at least one sector of the surrounding base station (101i),
- means that are configured to determine at least one candidate sector to be switched off as a function of whether the random sample points in the candidate sector fall within at least one sector of surrounding base stations (101i),
- means that are configured to select from among the candidate sectors a combination of sectors that are to be switched off, and to switch off the candidate sectors of the selected combination, and
- means that are configured to ascertain, for the candidate sector, a configuration of the parameters of the sectors that cover the candidate sector which, in the case of the smallest possible deviation from the configuration of the parameters during normal operation of the radio access network (104), leads to complete coverage of the candidate sector, and
- means that are configured to establish the ascertained configuration when the selected candidate sectors are switched off.

## Revendications

1. Procédé pour déterminer des ressources d'un réseau d'accès radio qui peuvent être désactivées en cas de faible charge de réseau, le procédé comportant les étapes suivantes :

   - détermination d'un chevauchement d'au moins un secteur d'une station de base (101i) du réseau d'accès radio (104) par au moins un secteur d'une station de base environnante (101i) du réseau d'accès radio (104), le chevauchement du secteur se faisant au moyen d'un calcul numérique à l'aide de points d'échantillonnage dans le secteur en fonction d'une portée d'émission de l'au moins un secteur de la station de base environnante (101i) du réseau d'accès radio (104) et la portée d'émission étant déterminée en fonction d'au moins un paramètre de l'au moins un secteur de la station de base environnante (101i),
   - détermination d'au moins un secteur candidat pour une désactivation lorsque les points d'échantillonnage se trouvent dans le secteur candidat dans l'au moins un secteur de stations de base environnantes (101i),
   - sélection, parmi les secteurs candidats, d'une combinaison de secteurs à désactiver et désactivation des secteurs candidats de la combinaison sélectionnée,
   - pour le secteur candidat étant déterminée une configuration des paramètres des secteurs recouvrant le secteur candidat qui, pour un écart aussi faible que possible de la configuration des paramètres en fonctionnement normal du réseau d'accès radio (104), entraîne le recouvrement complet du secteur candidat, et la configuration déterminée étant paramétrée lors de la désactivation des secteurs sélectionnés.

2. Procédé selon la revendication 1, un rayon d'émission du secteur candidat à désactiver étant réduit progressivement et les rayons d'émission des secteurs de chevauchement étant, de manière synchrone, agrandis progressivement.

3. Procédé selon la revendication 1, une distance par rapport aux stations de base (101i) desservant le secteur étant, pour déterminer la portée d'émission, déterminée au moyen d'un modèle d'affaiblissement de propagation, distance sur laquelle l'affaiblissement de propagation dépasse une valeur seuil donnée.

4. Procédé selon l'une des revendications précédentes, le chevauchement des secteurs de la station de base (101i) étant déterminé par un secteur d'une station de base environnante (101i) selon une configuration du paramètre du secteur des stations de base environnantes (101i) qui maximise la portée d'émission de l'autre secteur.

5. Procédé selon la revendication 1 ou 4, le paramètre incluant une inclinaison vers le bas de la direction du faisceau de l'antenne de la station de base environnante (101i) qui dessert le secteur et/ou une puissance d'émission de l'antenne.

6. Procédé selon la revendication 3 ou 4, la configuration du paramètre d'un secteur qui maximise la portée d'émission incluant une inclinaison vers le bas minimale de la direction du faisceau de l'antenne qui dessert le secteur et/ou une puissance d'émission maximale de l'antenne.

7. Procédé selon l'une des revendications précédentes, une combinaison de secteurs candidats à désactiver étant déterminée, pour laquelle des secteurs recouvrant les secteurs candidats contenus dans la combinaison ne sont pas désactivés.

8. Procédé selon l'une des revendications précédentes, une combinaison de secteurs candidats à désactiver étant déterminée, dans laquelle aucun autre secteur ne peut être désactivé sans perdre la couverture pour une zone partielle de la zone géographique couverte par le réseau d'accès radio (104).

9. Procédé selon l'une des revendications précédentes, une combinaison de secteurs candidats à désactiver étant déterminée, laquelle inclut un nombre maximal de stations de base (101i) pour lesquelles tous les secteurs sont des secteurs candidats.

10. Procédé selon l'une des revendications précédentes, le secteur candidat et les secteurs des stations de base environnantes (101i) couvrant le secteur candidat relevant de différentes technologies d'accès réseau.

11. Programme informatique comprenant un code logiciel adapté pour pouvoir exécuter un procédé selon l'une des revendications précédentes lorsqu'il tourne sur une installation de traitement de données.

12. Système pour déterminer des ressources d'un réseau d'accès radio (104) qui peuvent être désactivées en cas de faible charge de réseau, le système comprenant :

   - des moyens conçus pour déterminer un chevauchement d'au moins un secteur d'une station de base (101i) du réseau d'accès radio (104) par au moins un secteur d'une station de base environnante (101i) du réseau d'accès radio (104) au moyen d'un calcul numérique à l'aide de points d'échantillonnage dans le secteur en fonction d'une portée d'émission de l'au moins un secteur de la station de base environnante (101i) du réseau d'accès radio (104)

- des moyens pour déterminer la portée d'émission en fonction d'au moins un paramètre de l'au moins un secteur de la station de base environnante (101i),

- des moyens conçus pour déterminer au moins un secteur candidat pour une désactivation en fonction de la position des points d'échantillonnage dans le secteur candidat dans au moins un secteur de stations de base environnantes (101i),

- des moyens conçus pour sélectionner, parmi les secteurs candidats, une combinaison de secteurs à désactiver et pour désactiver les secteurs candidats de la combinaison sélectionnée et

- des moyens conçus pour déterminer, pour le secteur candidat, une configuration des paramètres des secteurs recouvrant le secteur candidat qui, pour un écart aussi faible que possible de la configuration des paramètres en fonctionnement normal du réseau d'accès radio (104), entraîne le recouvrement complet du secteur candidat, et

- des moyens conçus pour paramétrer la configuration déterminée lors de la désactivation des secteurs sélectionnés.

Fig. 1

Fig. 2

Fig. 3

Fig.4

Fig.5

20

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011096867 A1

**In der Beschreibung aufgeführte Nicht-Patentliteratur**

- **C. PENG et al.** Traffic-Driven Power Saving in Operational 3G Cellular Networks. *MobiCom,* 2011